# EUROPÄISCHE PATENTSCHRIFT

(11) **EP 2 552 688 B1**
(45) Veröffentlichungstag und Bekanntmachung des Hinweises auf die Patenterteilung: **26.02.2014**
(21) Anmeldenummer: 11715168.8
(22) Anmeldetag: 30.03.2011
(51) Int. Cl.: B32B 17/10, F41H 5/04, F41H 5/26, C03C 21/00

(54) **TRANSPARENTER GLAS-POLYMER-VERBUND**
TRANSPARENT GLASS-POLYMER COMPOSITE
ASSEMBLAGE VERRE-POLYMÈRE TRANSPARENT

(30) Priorität: 01.04.2010 DE 102010013641
(43) Veröffentlichungstag der Anmeldung: 06.02.2013
(73) Patentinhaber: SCHOTT AG, 55122 Mainz (DE)
(72) Erfinder: SCHAUPERT, Kurt, 65719 Hofheim (DE); ZACHAU, Thilo, 07778 Neuengönna (DE); KROPFGANS, Frieder, 07743 Jena (DE)
(86) Internationale Anmeldenummer: PCT/EP2011/001592
(87) Internationale Veröffentlichungsnummer: WO 2011/120680

(56) Entgegenhaltungen:
- WO-A1-03/068501
- DE-A1- 2 039 452
- DE-U1- 20 023 947

## Beschreibung

Die Erfindung betrifft eine transparente Vorrichtung zum Schutz vor Einwirkung von Schlag, und/oder Projektilen, und/oder Splittern, und/oder Druckwellen, wobei die Vorrichtung als Laminat aus mindestens 4 sprödbrüchigen transparenten Scheiben ausgeführt ist, die miteinander mittels transparenter Zwischenschichten aus organischen Polymeren verbunden sind, wobei das Laminat eine Gesamt-Dicke von zumindest 60 mm aufweist, wobei auf der von der Einwirkungs-Seite abgewandten Schutz-Seite das Laminat mit einer Splitterschutz-Schicht mit einer Dicke von 0,5 bis 12 mm abgeschlossen ist, die als transparente Polymerschicht ausgebildet ist.

Transparenter Schutz vor ballistischer Einwirkung, beispielhaft vor Gewehrmunition und Splittern, wird aus miteinander durch Kunststoff-Folien oder Gießharz-Schichten laminierten Glasplatten bzw. -scheiben hergestellt. Als Glas-Material wird Kalknatron-Glas und bei dickeren Verbunden wegen der erforderlichen Transmission auch eisenarmes Kalknatron-Glas verwendet. Die Schutzwirkung der Verbunde wird nach standardisierten Verfahren bestimmt und klassifiziert, wie sie beispielhaft in den Vorschriften STANAG 4569 und DIN 1063 oder VPAM APR 2006 dargestellt sind. In der STANAG 4569 ist beispielhaft für die Schutzstufe 3 eine Prüfung mit Hartkernmunition des Kalibers 7,62 x 51 mit Wolframkarbidkern sowie des Kalibers 7,62 x 54R mit Stahlkern vorgesehen. Weiterhin wird die Einwirkung von Granatsplittern durch eine Prüfung mit 20 mm "Fragmentsimulierenden Projektilen" (FSP) durchgeführt. Dieser Belastung muss der Verbund in der Weise widerstehen, dass die Projektile weder durchtreten noch Partikel von der Schutzeinrichtung abgehen, die eine Verletzung oder wesentliche Beschädigung zu schützender Personen oder Objekte hinter der Schutzeinrichtung bewirken würden.
Entscheidend für den Einsatz in Fahrzeugen ist neben der ausreichenden Schutzwirkung ein möglichst geringes Flächengewicht der Verbunde, da dieses in das Gesamtgewicht des Fahrzeugs eingeht und somit jede Gewichtsverbesserung es ermöglicht, die Nutzlast des Fahrzeugs zu erhöhen. Allgemein sind transparente Schutzeinrichtungen im oberen Bereich des Fahrzeugs, also oberhalb dessen Schwerpunkts, angeordnet. Dies führt dazu, dass ein niedriges Gewicht des transparenten Schutzes auch die Fahrstabilität auf schlechten Wegstrecken und bei Kurvenfahrten verbessern kann.

Als Polymerschichten werden Gießharze auf Epoxidharz-Basis und Folien aus Ethylenvinylacetat (EVA), Polyvinylbutyral (PVB) oder aus thermoplastischen Polyurethanen (TPU) verwendet.

Nach dem Stand der Technik wird das Laminat zur beschussabgewandten Seite mit einer risszähen Polymerschicht mit einer Dicke im Bereich von 0,5 mm bis 12 mm Dicke abgeschlossen. Dies dient dazu, die unter dynamischer Belastung im Laminat entstehenden Splitter aufzufangen, damit diese die Insassen des Fahrzeugs nicht verletzen.

Eine Verminderung des Flächengewichts des transparenten Schutzes kann durch teilweisen oder vollständigen Ersatz der Glasplatten aus Kalknatron-Glas durch andere sprödbrüchige Materialien wie Alumino- oder Borosilikatglas, Glaskeramik, transparenten Keramiken oder kristallinen Materialien, wie Saphir, erreicht werden. Aus Kostengründen kommen die hochpreisigen, in ihrer Schutzwirkung jedoch hoch wirksamen transparenten Keramiken und kristallinen Materialien allerdings kaum zum Einsatz.

In der DE 10 2008 043 718 A1 wird eine Panzerverglasung beschrieben, umfassend wenigstens eine nach außen orientierte transparente Glaskeramikscheibe (a) mit einer Dicke im Bereich von 3 - 20 mm, gegebenenfalls wenigstens eine Scheibe (b) aus der Gruppe Borosilikatglas, Kalknatronglas und Alumosilikatglas
mit einer Dicke im Bereich von 3 - 20 mm, die chemisch vorgespannt sein können, und wenigstens eine zum schützenden Objekt hin orientierte transparente Polymerscheibe (c), insbesondere Polycarbonatscheibe, wobei die Dicke der Scheibe (c) im Bereich zwischen 3 und 15 mm liegt; die einzelnen Scheiben sind durch transparente Zwischenschichten aus Gießharz oder Polymerfolien verbunden.

Aus der DE 692 27 344 T2 ist eine transparente Sicherheitsverglasung für Flugzeuge bekannt, umfassend eine zum Inneren der Flugzeugkabine gerichtete, chemisch vorgespannte Glasscheibe, die auf ihrer zur Kabine zeigenden Seite mit einer Splitterschutzschicht einer Dicke bis zu 0,6 mm versehen ist, eine 4 mm dicke, äußere Glasscheibe und eine zwischen äußerer und innerer Glasscheibe angeordnete, aus 7 Lagen bestehende PVB - Zwischenschicht mit einer Gesamtdicke von 4,02 mm (2 x 0,76 mm + 5 x 0,5 mm). Die chemisch vorgespannte Scheibe ist damit in einem Abstand von 8,02 mm von der Einwirkseite angeordnet.

Die in der DE 93 10 959 U1 beschriebene beschusshemmende transparente Verglasung weist auf ihrer zum Fahrgastraum weisenden Seite eine Splitterschutzschicht aus Polycarbonat einer Dicke von 3 mm auf; auf der Einwirkseite ist im Abstand von bis zu 5,5 mm eine chemisch gehärtete Scheibe angeordnet.

Zwischen der chemisch vorgespannten Scheibe und der Schutzseite ist ein gasgefüllter Bereich mit einer Ausdehnung zwischen 3 und 10 mm vorgesehen.

Gemäß DE 2 039 452 A weist der kugelsichere transparente Glas-Kunststoffschichtkörper in einem Abstand von 9,525 mm + 0,508 mm zur Einwirkseite eine chemisch gehärtete Glasscheibe und auf der, der Einwirkseite abgewandten Seite eine Polycarbonatschicht mit einer Stärke von 3,175 mm auf.
Auch die DE 200 23 947 U1 beschreibt eine ähnliche Panzerverbundglasscheibe.
Die EP 0 884 289 A1 offenbart ein Glaslaminat für Fahrzeuge, welches zumindest zwei Glasscheiben mit zumindest einer Zwischenschicht umfasst, wobei die äußerste Einzelschicht in dem Laminat ein Aluminosilikatglas ist. Dieses Aluminosilikatglas kann chemisch vorgespannt sein. Durch die Verwendung von chemisch vorgespanntem Aluminosilikat-Glas ist das Glas-Laminat besonders kratzfest und bricht, im Gegensatz zu thermisch vorgespanntem Glas, bei Belastung wie Steinschlag usw., in große Einzelstücke, so dass die Sicht durch das GlasLaminat weiterhin möglich ist.

In der Schrift JP-A-54-100415 wird eine laminierte Windschutzscheibe eines Fahrzeugs beschrieben, bei der die innere Scheibe eine Dicke von 1,5 mm oder weniger aufweist und chemisch vorgespannt ist. Dies dient dazu, Kopfverletzungen zu vermindern, wenn Passagiere von innen gegen die Windschutzscheibe geschleudert werden sollten.

Aus der DE 42 36 233 A1 ist eine Panzerglasscheibe für ein Kraftfahrzeug bekannt, die ausgehend von der Beschuss-Seite folgenden Schichtaufbau aufweist:
- mindestens zwei Glasblöcke (I, II), die jeweils eine erste Glasscheibe, eine Polycarbonatplatte und eine zweite Glasscheibe aufweisen,
- mindestens einen weiteren (dritten) Glasblock (III), der eine Glasscheibe und zumindest eine Polycarbonatplatte aufweist, die dem Fahrzeuginnenraum zugewandt ist, wobei
- zwischen den Glasblöcken (I, II, III) jeweils ein gasgefüllter Zwischenraum vorgesehen ist.

Aus der US 2007/0060465 A1 ist ein chemisch vorgespanntes Lithium-Aluminosilikatglas bekannt, das eine hohe Festigkeit gegenüber Bruch bei Biegung beim Auftreffen von Projektilen hoher Geschwindigkeit aufweist, wobei das Glas durch eine Druckspannung in der Oberfläche von mindestens 100.000 psi und einer Tiefe des Druckspannungsbereichs von mindestens 600 Mikrometern gekennzeichnet ist. In der Schrift wird davon ausgegangen, dass das Glas einem Bruch einen möglichst hohen Widerstand entgegensetzt. Auf die Anordnung der Glasscheibe in einem Laminat wird nicht eingegangen.
WO 03/068501 A1 betrifft ebenfalls Panzerverglasungen.

Aufgabe der vorliegenden Erfindung ist es, eine transparente Vorrichtung bereitzustellen, die ein geringes Flächengewicht bei ausreichendem Schutz und günstigen Kosten erzielt.

Diese Aufgabe wird durch die in den Ansprüchen gekennzeichneten Ausführungsformen gelöst.

Die Aufgabe der Erfindung wird dadurch gelöst, dass in einem Abstand von 6 mm bis 20 mm von der Einwirkungs-Seite aus im Laminat die der Einwirkungs-Seite zugewandte Oberfläche einer ersten chemisch vorgespannten sprödbrüchigen Scheibe angeordnet ist, wobei an der von der Einwirkungsseite abgewandten Oberfläche der ersten chemisch vorgespannten sprödbrüchigen Scheibe über eine Polyurethan-Schicht eine Polymer-Schicht einer Dicke zwischen 2 mm und 15 mm angeordnet ist und wobei an der von der Einwirkungsseite abgewandten Oberfläche dieser Polymerschicht über eine weitere Polyurethan-Schicht eine Schicht sprödbrüchigen Materials angebunden ist. Thermisch oder chemisch vorgespannte Glasscheiben weisen eine gegenüber unbehandelten Scheiben höhere Biegefestigkeit, aber auch höhere Oberflächenhärte auf und sind daher für Schutzanwendungen besonders geeignet. Beide Arten der Vorspannung führen zu einer Verfestigung durch eine Druckspannung in einer Oberflächenschicht der Scheibe, die von einer Zugspannung im Kernbereich der Scheibe kompensiert wird. Die chemische Vorspannung von Scheiben wird in einem an sich bekannten Prozess erreicht, indem die Scheiben bei geeigneter Temperatur in einem Salzbad gelagert werden, so dass in der Oberfläche der Scheiben ein Ionenaustausch stattfindet, bei dem kleine Ionen, die als Netzwerkwandler im Glas dienen, gegen größere ausgetauscht werden, die die Druckspannung erzeugen. Hierdurch gerät der Kern der Scheibe unter Zugspannung. Im Versagensfall brechen thermisch vorgespannte Scheiben kleinkrümelig in beispielhaft drei bis fünf Bruchstücke pro Kubikzentimeter und sind daher für antiballistischen Schutz nicht geeignet. Ein zweites oder weiteres ankommendes Projektil kann nicht gestoppt werden, denn das krümelig gebrochene Material kann nur einen wesentlich verminderten Anteil der kinetischen Energie des Projektils in elastisch/plastische Verformungsenergie, Wärme oder Rissenergie wandeln. Chemisch vorgespannte Scheiben zeigen demgegenüber trotz hoher Festigkeit ein grobes Bruchbild und können daher auch gegen Mehrfachtreffer einen wirksamen Schutz bieten.

In der erfindungsgemäßen Anordnung ist die der Einwirkungsseite zugewandte Oberfläche der chemisch vorgespannten sprödbrüchigen Scheibe in einem Abstand von 6 mm bis 20 mm hinter der Einwirkungs-Seite der transparenten Vorrichtung, der Trefferfläche also, angeordnet. Hierbei wird bei einem Hartkern-Projektil erst dessen weicher Mantel abgestreift, und der Hartkern erreicht dann die chemisch vorgespannte sprödbrüchige Scheibe. Sobald er in diese eindringt und die Zugspannungszone in der Scheibe erreicht, reißt die Scheibe. Hierdurch entsteht eine senkrecht zu der Flugbahn des Projektils verlaufende Stoßwelle, die sich im Glas mit einer Geschwindigkeit von 2000 m/s bis 5000 m/s fortpflanzt. Die Stoßwelle ist somit wesentlich schneller als das Projektil, das sich mit etwa 900 m/s bewegt. Die Stoßwelle übt eine Querkraft auf das Projektil aus, die ausreichen kann, das Projektil abzulenken oder sogar zu brechen. Insbesondere bei Hartkernen des Kalibers 7,62 mm aus hochfesten Stahl-Typen oder Wolframkarbid tritt vermehrt Projektil-Bruch auf. Dieser Bruch oder eine Ablenkung vermindern die Durchdringungswirkung des Hartkerns erheblich. Wegen der hohen Geschwindigkeit der Stoßwelle wird das wesentlich langsamere Projektil auf jeden Fall von ihr erfasst.

Der Bereich vor der chemisch vorgespannten sprödbrüchigen Scheibe kann aus einer einzigen Scheibe oder aus einem Laminat mehrerer Scheiben bestehen. Eine chemisch vorgespannte sprödbrüchige Scheibe direkt an der Einwirkungs-Seite hat die beschriebene, erfindungsgemäße Wirkung nicht, da der den Hartkern umgebende weiche Projektilmantel die Wirkung der Stoßwelle auf das Projektil dämpft.

Eine besonders vorteilhafte Wirkung bei möglichst geringem Laminatgewicht wird erzielt, wenn die erfindungsgemäße chemisch vorgespannte sprödbrüchige Scheibe eine Dicke zwischen 3 mm und 15 mm, bevorzugt zwischen 4 mm und 8 mm aufweist. In diesem Fall können besonders wirksam seitliche Kräfte auf das Projektil übertragen werden. Dies gilt insbesondere, wenn die der Einwirkungs-Seite zugewandte Oberfläche der chemisch vorgespannten sprödbrüchigen Scheibe in einem Abstand von 6 mm bis 20 mm von der Einwirkungs-Seite entfernt angeordnet ist.

Eine besonders kostengünstige Lösung mit Materialien, die eine hohe chemische Vorspannung aufweisen, kann erreicht werden, indem die chemisch vorgespannten sprödbrüchigen Scheiben als Kalk-Natron-Silikatglasscheiben, Alumino- oder Borosilikatglasscheiben oder als Lithium-Alumosilikat-Glasscheiben oder als transparente Glaskeramik-Scheiben ausgeführt sind. Diese Materialien können in ausreichenden Mengen mit den benötigten Abmessungen von etwa 1 m Breite und einer Länge von bis zu 3 m hergestellt werden.

Der Einschlag eines Projektils oder Splitters löst eine Druckwelle aus, die senkrecht in das Laminat mit einer höheren Geschwindigkeit als die Projektilgeschwindigkeit einläuft und zu einer, dem Projektil vorauseilenden Schädigung führen kann. Das Projektil wird von dem beschädigten Material weniger stark abgebremst als von intaktem Material. Eine vorteilhafte Ausführung sieht vor, die Druckwelle abzumindern, indem ein Teil des sprödbrüchigen Materials durch dicke Polymerschichten ersetz wird. Durch die geringere Ausbreitungsgeschwindigkeit der Schockwelle in Polymer wird diese gebremst. Weiterhin führt der Impedanzsprung an der Grenzfläche Sprödbruchmaterial-Polymer zur Bildung einer reflektierten Welle, die der eintreffenden Schockwelle entgegenläuft und sich im günstigsten Fall auslöschend überlagert. Es ist daher vorteilhaft, vorzusehen, dass an der der Einwirkungs-Seite abgewandten Oberfläche der ersten chemisch vorgespannten sprödbrüchigen Scheibe über eine Polyurethan-Schicht eine transparente Polymerschicht mit einer Dicke zwischen 2 mm und 15 mm angeordnet ist. Die Polymerschicht kann aus Polycarbonat, Polymethylenmetacrylat, als Mehrfachverbund von Folien aus Polyvinylbutyral oder thermoplastischen Polyurethanen, insbesondere auch "weichen" Typen, wie sie für die Schallentkopplung in Automobil- oder Architekturanwendungen vorgesehen sind, bestehen. Nach dem Stand der Technik ist vorgesehen, dass Zwischenschichten aus Polycarbonat oder Polymethylenmetacrylat beidseitig mit thermoplastischen Polyurethanen mit den sprödbrüchigen Scheiben verbunden werden, um für beide Materialtypen eine ausreichende dauerhafte gegenseitige Adhäsion zu erreichen.

Eine chemische Vorspannung von Glasscheiben verbessert deren Biegefestigkeit, so dass sie eine bessere Beständigkeit gegen Schlageinwirkung aufweisen. Trifft ein stumpfes Projektil wie zum Beispiel ein Splitter, beispielhaft ein 20 mm "Fragmentsimulierendes Projektil", auf das Scheibenpaket, durchdringt er das Laminat nicht, sondern wirkt durch den eingetragenen Impuls, indem die entstehende Druckwelle zur Ablösung von Scheibenteilen auf der von der Einwirkung abgewandten Seite führen. Zur Erreichung einer verbesserten Beständigkeit von Laminaten ist es daher vorteilhaft, die Biegefestigkeit der von der Einwirkung abgewandten Seite zu verbessern, indem an der der Einwirkungs-Seite zugewandten Oberfläche der Splitterschutz-Schicht eine weitere chemisch vorgespannte sprödbrüchige Scheibe mit einer Dicke zwischen 3 mm und 15 mm beabstandet mit einer Zwischenschicht angeordnet ist Hierbei kann die Zwischenschicht als Polymerfolie oder als Verbund aus zumindest einer Polymer-Scheibe einer Dicke von 1,5 mm bis 12 mm mit Polymer-Folien ausgebildet sein.

Glaskeramik weist eine höhere Härte und Schlagfestigkeit sowie eine höhere Risszähigkeit und Biegezugfestigkeit als Glas auf. Es ist daher für die Schutzwirkung vorteilhaft, wenn zumindest eine der sprödbrüchigen Scheiben des Laminates als transparente Glaskeramik-Scheibe ausgeführt ist.

Eine besonders gute Schutzwirkung der Vorrichtung wird erreicht, indem die Dicke der die Einwirkungs-Seite bildenden Scheibe zwischen 10 % und 20 % der Gesamtdicke des Sprödbruchmaterials im Laminat beträgt.

Floatglas wird bei der Herstellung nach der Schmelze über ein Floatmedium, beispielhaft ein Zinnbad, gezogen, um die gewünschte Planität und Oberflächenqualität zu erzielen. Die mechanische Festigkeit der dem Zinnbad zugewandeten Seite, nach einer Biegezugprüfung bewertet, ist dabei geringer als die der Gegenseite. Es ist daher für die Schutzwirkung vorteilhaft, wenn in einem Floatprozess hergestellte sprödbrüchige Scheiben mit ihrer Zinnbad-Seite im Laminat zu der Einwirkungs-Seite hin orientiert sind, um die elastische Festigkeit der Floatglasscheiben optimal zur Wandlung der kinetischen Energie des Projektils oder der Schockwelle in elastische Verformarbeit zu nutzen.

Die Erfindung wird im Folgenden anhand von in den Figuren dargestellten Ausführungsbeispielen näher erläutert.

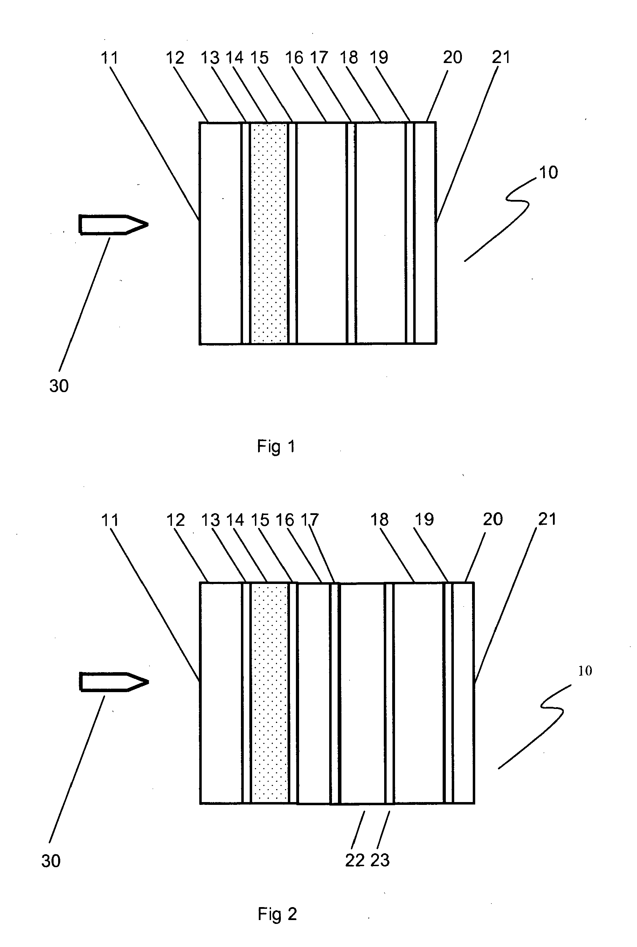

Die Figur 1 zeigt schematisch in einer nicht maßstäblichen Darstellung ein Laminat 10 mit einer Einwirkungs-Seite 11, auf die sich ein Projektil 30 zubewegt. Die Einwirkungs-Seite 11 ist beispielhaft die Außenseite einer Front- oder Seitenscheibe eines Kraftfahrzeugs. Eine Schutz-Seite 21 des Laminats 10 ist einem zu schützenden Objekt zugewendet; sie ist beispielhaft die Innenseite einer Scheibe eines Kraftfahrzeugs. Von der Einwirkungs-Seite 11 aus gesehen besteht das Laminat 10 aus einer ersten, z.B. 20 mm dicken, Glasplatte 12, die mittels einer ersten Zwischenschicht 13 mit einer chemisch vorgespannten sprödbrüchigen Scheibe 14, z.B. mit 15 mm Dicke, verbunden ist, welche wiederum über eine zweite Zwischenschicht 15 mit einer zweiten, z.B. 10 mm dicken, Glasplatte 16 verbunden ist. Die zweite Glasplatte 16 ist über eine dritte Zwischenschicht 17 mit einer dritten ebenfalls 10 mm dicken Glasplatte 18 verbunden, an die über eine vierte Zwischenschicht 19 eine z.B. 10 mm dicke Splitterschutz-Schicht 20 anschließt.

Die Zwischenschichten 13, 15, 17 und 19 sind Folien aus Polyvinylbutyral oder thermoplastischem Polyurethan, über die die Bestandteile des Laminats 10 in einem Autoklavierprozess verbunden worden sind. Alternativ kann ein Teil der Zwischenschichten 13, 15, 17 oder 19 als Gießharzschicht ausgeführt sein. Die Splitterschutzschicht 20 ist als Polycarbonatscheibe ausgeführt, so dass bei Einwirkung des Projektils 30 auftretende Splitter nicht an der Schutz-Seite 21 austreten und so Verletzungen vermieden werden können. Die chemisch vorgespannte sprödbrüchige Scheibe 14 bewirkt, dass einerseits das Projektil 30 bei dessen Durchtritt durch die chemisch vorgespannte sprödbrüchige Scheibe 14 eine seitliche Beaufschlagung durch eine Druckwelle erfährt und aus seiner Bahn gelenkt oder beschädigt wird. Die chemisch vorgespannte sprödbrüchige Scheibe 14 zerfällt dabei in so große Bruchstücke, dass bei Eintreffen weiterer Projektile nahe der Aufschlagstelle des Projektils 30 weitgehend intakte Bereich der chemisch vorgespannten sprödbrüchigen Scheibe 14 zum Schutz beitragen können.

In Figur 2 sind Bestandteile des zumindest 60 mm dicken Laminats 10, die bereits in Figur 1 beschrieben wurden, mit gleichen Bezugszeichen gekennzeichnet. Anschließend an die dritte Zwischenschicht 17 ist eine Polymerplatte 22 von 2 - 15 mm Dicke angeordnet, die mit einer fünften Zwischenschicht 23 mit der dritten Glasplatte 18 verbunden ist. Die Polymerplatte 22 kann auch erfindungsgemäß so angeordnet sein, dass sie über die zweite Zwischenschicht 15 an die chemisch vorgespannte Scheibe 14 anschließt.

## Patentansprüche

1. Transparente Vorrichtung zum Schutz vor einer Einwirkung von Schlag, Projektilen, Splittern oder Druckwellen, wobei die Vorrichtung als Laminat (10) aus mindestens 4 sprödbrüchigen transparenten Scheiben ausgeführt ist, die miteinander mittels transparenter Zwischenschichten aus Gießharz oder Polymer-Folien verbunden sind, wobei das Laminat eine Gesamt-Dicke von zumindest 60mm aufweist und wobei auf der von der Einwirkungs-Seite (11) abgewandten Schutz-Seite (21) das Laminat mit einer Splitterschutz-Schicht (20) mit einer Dicke von 0,5 bis 12 mm abgeschlossen ist, die als transparente Polymerschicht ausgebildet ist,
**dadurch gekennzeichnet,**
**dass** in einem Abstand von 6 mm bis 20 mm von der Einwirkungs-Seite (11) aus im Laminat (10) die der Einwirkungs-Seite (11) zugewandte Oberfläche eine erste chemisch vorgespannte sprödbrüchige Scheibe (14) angeordnet ist, dass an der von der Einwirkungsseite (11) abgewandten Oberfläche der ersten chemisch vorgespannten sprödbrüchigen Scheibe (14) über eine Polyurethan-Schicht eine Polymer-Schicht (22) einer Dicke zwischen 2 mm und 15 mm angeordnet ist und dass an der von der Einwirkungsseite abgewandten Oberfläche dieser Polymerschicht über eine weitere Polyurethan-Schicht eine Schicht sprödbrüchigen Materials angebunden ist.

2. Vorrichtung nach Anspruch 1,
**dadurch gekennzeichnet,**
**dass** die chemisch vorgespannte sprödbrüchige Scheibe (14) eine Dicke zwischen 3 mm und 15 mm, bevorzugt zwischen 4 mm und 8 mm aufweist.

3. Vorrichtung nach Anspruch 1 oder 2,
**dadurch gekennzeichnet,**
**dass** die chemisch vorgespannte sprödbrüchige Scheibe (14) als Kalk-Natron Silikatglasscheibe, Alumino- oder Borosilikatglasscheibe oder als Lithium-Aluminosilikatglas-Scheibe ausgeführt ist.

4. Vorrichtung nach einem der Ansprüche 1 bis 3,
**dadurch gekennzeichnet,**
**dass** die Polymer-Schicht (22) als Schicht aus Polycarbonat, Polymethylmethacrylat oder Polyethylenterephthalat oder aus einer Kombination von Einzelschichten der Materialien ausgeführt ist.

5. Vorrichtung nach einem der Ansprüche 1 bis 4,
**dadurch gekennzeichnet,**
**dass** an der der Einwirkungs-Seite (11) zugewandten Oberfläche der Splitterschutz-Schicht (20) eine weitere chemisch vorgespannte sprödbrüchige Scheibe (18) mit einer Dicke zwischen 3 mm und 15 mm, beabstandet mit einer Zwischenschicht (19) angeordnet ist, wobei die Zwischenschicht (19) als Polymerfolie oder als Verbund aus zumindest einer Polymer-Scheibe einer Dicke zwischen 1,5mm und 12mm mit Polymer-Folien ausgebildet ist.

6. Vorrichtung nach einem der Ansprüche 1 bis 5,
**dadurch gekennzeichnet,**
**dass** die Dicke der die Einwirkungs-Seite (11) bildenden Scheibe zwischen 10 % und 20 % der Gesamtdicke des Sprödbruchmaterials im Laminat (10) beträgt.

7. Vorrichtung nach einem der Ansprüche 1 bis 6,
**dadurch gekennzeichnet,**
**dass** in einem Floatprozess hergestellte sprödbrüchige Scheiben mit ihrer Floatmedium-Seite im Laminat (10) zu der Einwirkungs-Seite (11) hin orientiert eingebaut sind.

## Claims

1. Transparent apparatus for protection from impact, from projectiles, from small fragments or from pressure waves, where the apparatus has been designed as laminate (10) made of at least 4 brittle transparent panes bonded to one another by means of transparent intermediate layers made of casting resin or of polymer foils, where the total thickness of the laminate is at least 60 mm and where the laminate has, on the protected side (21) facing away from the exposed side (11), a concluding anti-splinter layer (20) of thickness from 0.5 to 12 mm, designed as transparent polymer layer,
**characterized in that**
the arrangement has, at a distance of from 6 mm to 20 mm, starting from the exposed side (11) within the laminate (10), that surface of a first chemically tempered brittle pane (14) that faces towards the exposed side (11), and **in that** the arrangement has, on that surface of the first chemically tempered brittle pane (14) that faces away from the exposed side (11), by way of a polyurethane layer, a polymer layer (22) of thickness from 2 mm to 15 mm, and **in that** there is, on that surface of the said polymer layer that faces away from the exposed side, bonded by way of a further polyurethane layer, a layer of brittle material.

2. Apparatus according to Claim 1,
**characterized in that**
the thickness of the chemically tempered brittle pane (14) is from 3 mm to 15 mm, preferably from 4 mm to 8 mm.

3. Apparatus according to Claim 1 or 2,
**characterized in that**
the chemically tempered brittle pane (14) has been designed as soda-lime silicate glass pane, as alumino-or borosilicate glass pane or as lithium-aluminosilicate glass pane.

4. Apparatus according to any of Claims 1 to 3,
**characterized in that**
the polymer layer (22) has been designed as layer made of polycarbonate, polymethyl methacrylate or polyethylene terephthalate or of a combination of individual layers of the materials.

5. Apparatus according to any of Claims 1 to 4,
**characterized in that**
the arrangement has, on that surface of the anti-splinter layer (20) that faces towards the exposed side (11), a further chemically tempered brittle pane (18) of thickness from 3 mm to 15 mm, separated by an intermediate layer (19), where the intermediate layer (19) has been designed as polymer foil or as composite made of at least one polymer pane of thickness from 1.5 mm to 12 mm with polymer foils.

6. Apparatus according to any of Claims 1 to 5,
**characterized in that**
the thickness of the pane that forms the exposed side (11) is from 10% to 20% of the total thickness of the brittle material in the laminate (10).

7. Apparatus according to any of Claims 1 to 6,
**characterized in that**
brittle panes produced in a float process have been incorporated with their float-medium side orientated towards the exposed side (11) within the laminate (10).

## Revendications

1. Dispositif transparent pour la protection contre l'effet d'un coup, de projectiles, d'éclats ou d'ondes de pression, dans lequel le dispositif est réalisé sous la forme d'un stratifié (10) composé d'au moins 4 vitres transparentes fragiles, qui sont assemblées l'une à l'autre au moyen de couches intermédiaires transparentes en résine de coulée ou en feuilles de polymère, dans lequel le stratifié présente une épaisseur totale d'au moins 60 mm et dans lequel, sur le côté de protection (21) opposé au côté exposé (11), le stratifié se termine par une couche (20) de protection contre les éclats d'une épaisseur de 0,5 à 12 mm, qui est réalisée sous la forme d'une couche de polymère transparente, **caractérisé en ce que** la surface d'une première vitre fragile (14) chimiquement précontrainte tournée vers le côté exposé (11) est disposée dans le stratifié (10) à une distance de 6 mm à 20 mm du côté exposé (11), **en ce qu'**une couche de polymère (22) d'une épaisseur comprise entre 2 mm et 15 mm est disposée au moyen d'une couche de polyuréthane sur la surface de la première vitre fragile (14) chimiquement précontrainte opposée au côté exposé (11) , et **en ce qu'**une couche de matière fragile est assemblée à la surface de cette couche de polymère opposée au côté exposé au moyen d'une autre couche de polyuréthane.

2. Dispositif selon la revendication 1, **caractérisé en ce que** la vitre fragile (14) chimiquement précontrainte présente une épaisseur comprise entre 3 mm et 15 mm, de préférence entre 4 mm et 8 mm.

3. Dispositif selon la revendication 1 ou 2, **caractérisé en ce que** la vitre fragile (14) chimiquement précontrainte est réalisée sous la forme d'une vitre en verre de silicate sodo-calcique, d'une vitre en verre alumino-silicaté ou boro-silicaté ou sous la forme d'une vitre en verre d'aluminosilicate de lithium.

4. Dispositif selon l'une quelconque des revendications 1 à 3, **caractérisé en ce que** la couche de polymère (22) est réalisée sous la forme d'une couche de polycarbonate, de polyméthyl-méthacrylate ou de polyéthylène téréphtalate ou d'une combinaison de couches individuelles des matières.

5. Dispositif selon l'une quelconque des revendications 1 à 4, **caractérisé en ce qu'**une autre vitre fragile (18) chimiquement précontrainte d'une épaisseur comprise entre 3 mm et 15 mm est disposée sur la surface de la couche de protection contre les éclats (20) tournée vers le côté exposé (11), en étant espacée avec une couche intermédiaire (19), dans lequel la couche intermédiaire (19) est réalisée sous la forme d'une feuille de polymère ou d'un composite composé d'au moins une vitre de polymère d'une épaisseur comprise entre 1,5 mm et 12 mm avec des feuilles de polymère.

6. Dispositif selon l'une quelconque des revendications 1 à 5, **caractérisé en ce que** l'épaisseur de la vitre formant le côté exposé (11) vaut entre 10 % et 20 % de l'épaisseur totale de la matière fragile dans le stratifié (10).

7. Dispositif selon l'une quelconque des revendications 1 à 6, **caractérisé en ce que** des vitres fragiles fabriquées par la technique du floatglas sont montées avec leur côté de contact avec le bain de flottation orienté dans le stratifié (10) en direction du côté exposé (11).
